# EUROPEAN PATENT APPLICATION

(11) **EP 2 444 606 A1**
(43) Date of publication of application: **25.04.2012**
(21) Application number: 10789501.3
(22) Date of filing: 16.06.2010
(51) Int. Cl.: F01N 3/02, B01D 39/20, B01D 53/94, F01N 3/10, F01N 3/24, F01N 3/28, B01D 46/42, B01J 23/46

(54) **EXHAUST GAS TREATMENT DEVICE FOR DIESEL ENGINE**

(30) Priority: 17.06.2009 JP 2009144173
(71) Applicant: Hitachi Construction Machinery Co., Ltd., Bunkyo-ku Tokyo 112-0004 (JP)
(72) Inventor: MINAMI, Wataru, Tsuchiura-shi Ibaraki 300-0013 (JP); YAMAMOTO, Hikaru, Tsuchiura-shi Ibaraki 300-0013 (JP)
(74) Representative: Beetz & Partner
(86) International application number: PCT/JP2010/060160
(87) International publication number: WO 2010/147127

(57) **Abstract**

An apparatus for treating Diesel engine exhaust gas includes a filter unit which is located in the upstream side of a flow passage in a Diesel engine exhaust duct, the filter unit being composed of a plural number of filter chambers which are thermally insulated from each other and selectively opened for admission of the exhaust gas. Located in the downstream side is a nitrogen oxide treatment section to induce reactions between nitrogen oxides and reductant gas components of the exhaust gas. The exhaust gas is admitted into one of the filter chambers in one time period to trap particulate material on a filter in a filter chamber while letting reductant gas components of the exhaust gas pass through toward the nitrogen oxide treatment section which is located in the downstream side. In the nitrogen oxide treatment section, reducing reactions are induced between nitrogen oxides and reductant gas components of the exhaust gas in the presence of a nitrogen oxide reduction catalyst. Concurrently, in a filter chamber which is disconnected from an exhaust gas inlet passage, a heater is turned on to burn off particulate matter trapped on a filter in a filter chamber.

## Description

### TECHNICAL FIELD

This invention relates to an apparatus for treating Diesel engine exhaust, particularly suitable for use on a vehicle like a construction machine which is driven from a Diesel engine, for the purpose of cleaning its exhaust gas by removal of toxic particulate substances and nitrogen oxides.

### TECHNICAL BACKGROUND

As an internal combustion engine, Diesel engines excel gasoline engines in heat efficiency and are at an advantage in fuel cost or mileage and other aspects except for the need for taking an ecological countermeasure or countermeasures to cope with emissions of a large amount of black smoke of so-called PM (particulate matter) in addition to nitrogen oxide (NOx). In this connection, there have thus far been proposed various exhaust cleaning systems which are adapted to remove NOx and PM from exhaust gas. NOx are converted to N₂ by a reducing reaction before release to the atmosphere. On the other hand, PM is removed by the use of a permeable filter which is capable of trapping PM while permitting passage of gaseous components of exhaust gas.

NOx are converted to N₂ gas by a reducing reaction in the presence of a reducing agent or reductant. For example, disclosed in Patent Literature 1 below is a NOx treatment system which is incorporated into an exhaust gas duct for treatment of nitrogen oxides. This treatment system is adapted to induce reducing reactions between nitrogen oxides NOx and a reductant. In order to induce reducing reactions in an efficient and effective manner, this treatment system is arranged to treat exhaust gases by reduction in the presence of a nitrogen oxide reduction catalyst. In this regard, as a nitrogen oxide reduction catalyst, the system of Patent Literature employs a metal such as iridium or rhodium in combination with a carrier of silica. Further, as a preferred reductant, a mention is made of hydrogen, carbon monoxide, hydrocarbons, and oxygen-containing compounds.

A system for removal of PM in exhaust gas is disclosed, for example, in Patent Literature 2 below. In Patent Literature 2, a filter for separating PM components from other exhaust gas components is made of ceramic fiber having sufficient heat resistance along with air or gas permeability. This filter is put in an exhaust gas flow to trap particulate matter in the exhaust gas. The PM trapped on the filter, however, causes clogging of the filter, increasing pressure losses in the exhaust gas flow and as a result making it difficult to secure a sufficient flow rate of the exhaust gas. To cope with this problem, the permeable filter is provided with a heater thereby to heat and burn off trapped PM.

### PRIOR ART LITERATURE(S)

Patent Literature 1: Japanese Patent Application Laid Open under 2004-73921
Patent Literature 2 Japanese Patent Application Published under 4,023,514

### SUMMARY OF THE INVENTION

### PROBLEM(S) TO BE SOLVED BY THE INVENTION

In Patent Literature 1, as a preferred reducing agent or reductant for use in detoxifying NOx in exhaust gas by conversion to NO₂ a mention is made of hydrogen, carbon monoxide, hydrocarbons, oxygen-containing compounds. On the other hand, in Patent Literature 2, trapped PM is burned off to prevent clogging of a filter, causing oxidation to carbon monoxide and hydrocarbons in the exhaust gas which is passed through the filter. That is to say, although a reductant is necessitated in the NOx treating system of Patent Literature 1, reductant components of exhaust gas, including carbon monoxide and hydrocarbons, are consumed at the time of burning off trapped PM in Patent Literature 2.

Therefore, in case the NOx treating technology of Patent Literature 1 is combined with the PM stripping technology of Patent Literature 2, it becomes difficult to utilize carbon monoxide and hydrocarbons which exist in the exhaust gas as a reductant useful in the treatment of NOx. That is to say, in order to detoxify NOx and eliminate PM in Diesel engine exhaust gas on the basis of disclosures of Patent Literatures 1 and 2, it becomes a requisite to provide an additional feed path for a reductant which induces reducing reactions in the treatment of NOx. In this regard, it is conceivable to feed exhaust gas to a NOx treating system in a stage anterior to removal of PM. However, in that case, one will face a problem of contamination of a nitrogen oxide reduction catalyst with PM to such a degree as to lose its functions as a catalyst prematurely in an early stage.

Thus, it is difficult to construct an all-round cleaning system for Diesel engine exhaust gas, by simply combining the NOx treating mechanism of Patent Literature 1 with the PM elimination mechanism of Patent Literature 2.

In view of the foregoing situations, it is an object of the present invention to provide an apparatus for treating Diesel engine exhaust gas to effectively get rid of environmental pollutants such as PM and NOx which are contained in a large amount in Diesel engine exhaust gas.

### MEANS FOR SOLVING PROBLEM(S)

In order to achieve the above-stated objective, according to the present invention, there is provided an apparatus for treating Diesel engine exhaust gas, into which Diesel engine exhaust gas is introduced to get rid of particulate matter and to reduce nitrogen oxides in the exhaust gas to harmless nitrogen gas, **characterized in that** the apparatus comprises: a filter unit located in an upstream side of a Diesel engine exhaust gas duct and composed of a plural number of filter chambers each encasing a permeable filter member capable of trapping particulate matter in the exhaust gas while permitting passage therethrough of reductant gas components in the exhaust gas, and a nitrogen oxide treatment section located in a downstream side of the exhaust gas duct and encasing a nitrogen oxide reduction catalyst to induce reducing reactions between nitrogen oxides and the reductant gas components in the exhaust gas; the filter chambers of the filter unit being thermally insulated from each other and each provided with a heater to burn off trapped particulate matter; and a control means for the control of exhaust gas feed to the respective filter chambers of the filter unit, the control means being adapted to feed exhaust gas successively to the filter chambers, making an exhaust gas feed to one filter chamber in one time period while suspending an exhaust gas feed to other filter chambers during that time period.

The filter in each one of the above-mentioned filter chambers is a permeable filter which is capable of trapping solid particulate matter (PM) like black smoke in the exhaust gas while permitting passage therethrough of gaseous components of the exhaust gas. Diesel engine exhaust gas generally contains reductant gas components such as carbon monoxide and hydrocarbons. These reductant gas components are allowed to flow out of a filter chamber without being consumed there, and utilized as reducing agents in the nitrogen oxide treatment section which is located downstream of the filter chamber. More particularly, a permeable filter of ceramic fiber filter of good heat resistance is employed in each one of the filter chambers in conditions which will prevent oxidation reactions of the exhaust gas when it is admitted selectively into one of the filter chambers and brought into contact with the filter, letting reductant gas components in the exhaust gas pass through.

As the filter is used continuously and repeatedly for trapping PM, it is inevitably clogged with trapped PM. The filter unit is provided with a plural number of filter chambers, so that, while one filter chamber is in a phase or stage of trapping PM, filters in other filter chambers are regenerated by getting rid of trapped PM. For this purpose, the respective filter chambers are successively connected to an exhaust inlet passage one after another by means of a shutter, which is operated to connect the exhaust inlet passage selectively to one of the filter chambers in one time period while disconnecting other filter chambers from the exhaust inlet passage during that time period. A heater which is provided in each one of the filter chambers is turned on to burn off trapped PM when not in a PM trapping phase, thereby to restore the filter performance. In this regard, it is preferred that each one of the filter chambers be enshrouded in a heat insulating wall to thermally insulate a filter chamber in a PM trapping phase from a filter chamber or chambers which are in a heated state for restoration of filter performance.

In addition to combustion of PM components, the heater which is provided in each filter chamber can be utilized for exhaust gas temperature control. That is, it is desirable to control the exhaust gas temperature in such a range as would accelerate nitrogen oxide reducing reactions at the time when NOx in the exhaust gas are reacted with a reductant in the presence of a nitrogen oxide reduction catalyst in the nitrogen oxide treatment section which is located downstream of the filter unit. In the case of an iridium base catalyst, it is activated to a maximum degree in a temperature range of from 240°C to 300°C. Accordingly, in a filter chamber which is in the PM stripping stage, it is desirable to control the heater in that chamber in such a way to heat the exhaust gas up to a temperature range which will contribute to acceleration of reducing reactions in the succeeding nitrogen oxide treatment section.

After removal of PM in a filter chamber, the exhaust gas which contains reductant gas components is introduced into the nitrogen oxide treatment section which is located downstream of the filter unit and packed with a nitrogen oxide reduction catalyst. In this instance, various metal oxides can be used as a catalyst. More specifically, iridium or rhodium can be suitably used in combination with a carrier of porous silica. In the presence of a catalyst of this sort, nitrogen oxides (NOx) in the exhaust gas are converted to N₂ gas and H₂O by reactions with reductant gas components in the exhaust gas including carbon monoxide and hydrocarbons. Thus, the Diesel engine exhaust gas is cleaned by removal or reductions in amount of PM and NOx components.

PM which is contained in a large amount in Diesel engine exhaust gas is securely trapped on a filter in one of the filter chambers under conditions which will not impair reductant gas components, and the exhaust gas which still contains NOx is introduced into the nitrogen oxide treatment section along with the reductant gas components to get rid of environmental pollutants in Diesel engine exhaust gas. Besides, while PM is removed in one filter chamber, filters in other chambers are regenerated by complete combustion of trapped PM.

### BRIEF DESCRIPTION OF THE DRAWINGS

[Fig. 1] is s system diagram of an apparatus for treating Diesel engine exhaust gas, according to the present invention.
[Fig. 2] is a diagrammatic illustration explanatory of structural makeup of a filter chamber.

### DESCRIPTION OF PREFERRED EMBODIMENT(S)

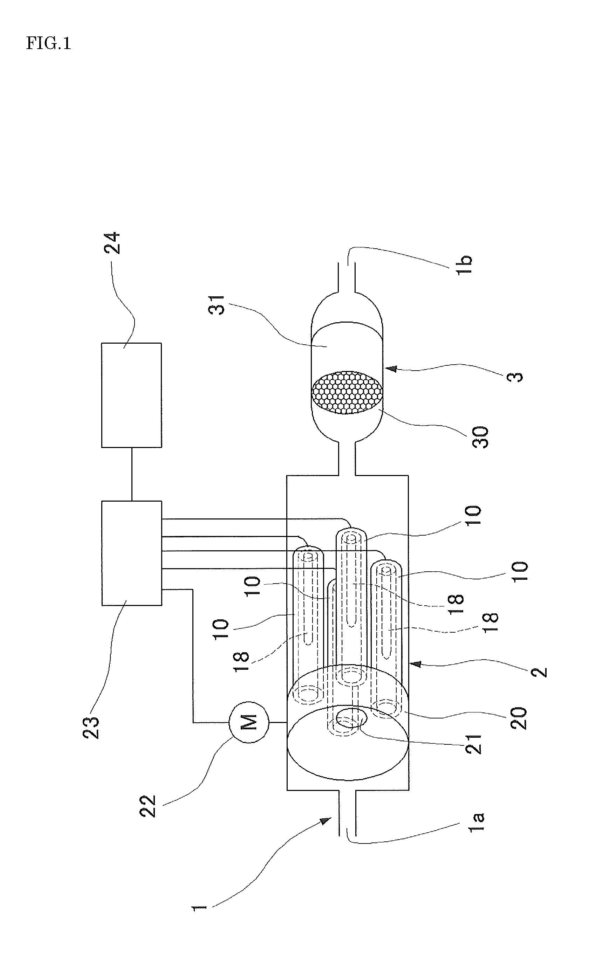

Hereafter, the present invention is described by way of its preferred embodiments. Shown in Fig. 1 is a system arrangement adopted by the present invention. In that figure, indicated at 1 is an exhaust duct for conduction of exhaust gas from a Diesel engine. A filter unit 2 is fitted in this exhaust duct 1 at an upstream end of the latter in the direction of exhaust gas flow, and a nitrogen oxide treatment section 3 is located in a downstream side of the exhaust duct 1.

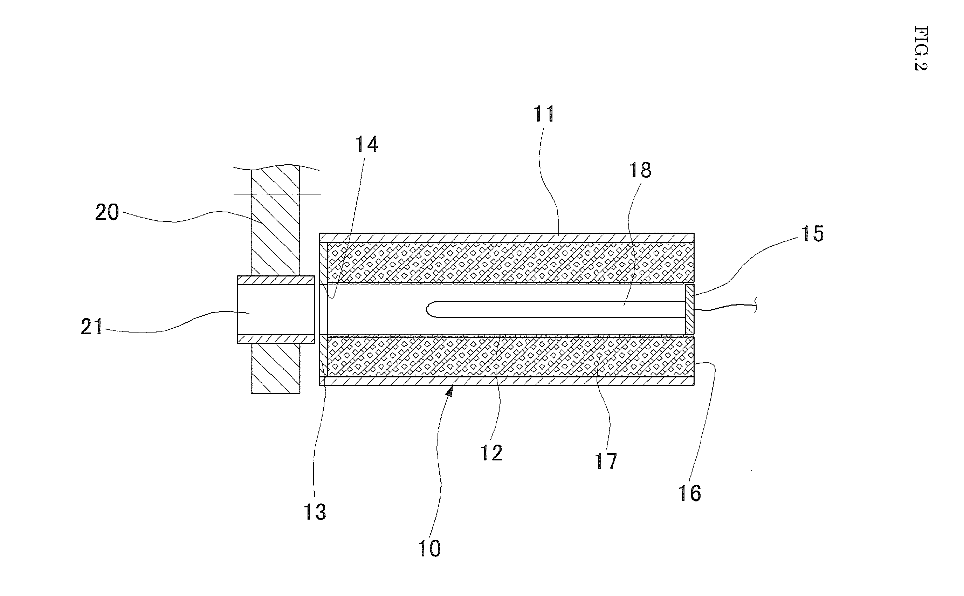

The filter unit 2 is composed of a plural number of filter chambers 10 each having a tubular outer casing 11 and a tubular inner casing 12 which is located internally of the outer casing tube 11 as shown in Fig. 2. In the upstream side of the exhaust duct 1, each filter chamber is provided with a gas inlet plate 13 with an inlet opening 14 at a position radially inward of the inner casing 12. The tubular inner casing 12 is formed of a porous plate to permit permeative circulation of an influent gas. On the other hand, the outer casing 11 is made up of heat insulating walls. Further, an end closure plate 15 is fitted in the inner casing tube 12 at the downstream end of the filter unit 2. An annular outlet opening 16 is formed between the outer and inner casings 11 and 12.

Engine exhaust gas is admitted into one of the filter chambers 10 through the inlet opening 14 and allowed to flow into the annular space between the outer and inner casings 11 and 12, through the pores in the porous walls of the inner casing tube 12. Exhaust gas is brought into contact with a filter 17 which is packed in the annular space between the outer and inner casings 11 and 12 to trap particulate matter (PM) thereon. As a consequence, PM is filtered out and separated from the exhaust gas before it flows out through the outlet opening 16.

Trapped PM on the filter 17, including black smoke, is rendered harmless by complete combustion. At the same time, the filter 17 can be regenerated by complete combustion of trapped PM on the filter 17. For this purpose, a heater 18 is provided internally of the inner casing 12 of each filter chamber 10. The heater 18 is fixedly supported on the end closure plate 15. Trapped PM in the filter 17 can be burned off completely by turning on the heater 18. Since the filter chamber 10 is heated to a high temperature at this time, the filter 17 is made of ceramic fiber with sufficient heat resistance.

In the case of the particular embodiment shown in Fig. 1, the filter unit 2 is composed of four filter chambers 10. By means of a rotary shutter 20, the inlet openings 14 to the respective filter chambers 10 are selectively connected to an exhaust inflow passage 1a which is connected to the exhaust duct 1. The rotary shutter 20 is provided with a communication port 21, by way of which the respective filter chambers 10 are successively connected to the inflow passage 1a one after another by rotation of the rotary shutter 20. That is to say, during a time period when one of the filter chambers 10 is connected to the exhaust inflow passage 10, other filter chambers 10 are disconnected from the exhaust inflow passage 1a.

The rotary shutter 20 is rotationally driven from a motor 22. The motor 22 as well as the heaters 18 are put in operation under control of a control circuit 23. In the case of a Diesel engine vehicle, for example, in the case of a construction machine like hydraulic power shovel type excavator, a battery is mounted on the vehicle. Such an onboard battery can be utilized as a power source 24 for the motor 22 and heater 18.

The nitrogen oxide treatment section 3, which is located downstream of the filter unit 2 in the exhaust duct 1, is constituted by a reaction chamber 30 which is packed with a nitrogen oxide reduction catalyst 31. The nitrogen oxide reduction catalyst 31 is constituted, for example, by a honeycomb structure of an occlusion material with good permeability. NOx is occluded in the occlusion material along with the reduction catalyst to induce a reducing reaction, and resulting N₂ gas and H₂O are discharged through an outflow passage 1b. As a nitrogen oxide reductant, for example, an iridium or rhodium metal on a porous silica carrier with a small amount of alkaline metal content can be suitably applied.

Further, as a reductant to be reacted with NOx, hydrogen, carbon monoxide, hydrocarbons and oxygen-containing compounds can be used for this purpose. Diesel engine exhaust gas contains large amounts of reducing gas components including carbon monoxide and hydrocarbons. Thus, the exhaust gas itself can be used as a reductant. For this purpose, the exhaust gas is retained in a non- oxidation state reactions until it is introduced into the nitrogen oxide treatment section 3.

As described hereinabove, PM is trapped on the filters 17 in the respective filter chambers 10 of the filter unit 2 which is located upstream of the nitrogen oxide treatment section 3 in the exhaust duct 1. Trapped PM is burned off in the filter chambers 10 by the heaters 18 to regenerate the respective filters. However, if the exhaust gas is fed to a filter chamber 10 which is in a phase of burning off trapped PM, the reducing gas components of the exhaust gas will lose functions as a reductant.

Of a plural number of filter chambers 10 of the filter unit 2, regeneration of a filter 17 by complete combustion of PM is not carried out in a filter chamber 10 which is in the phase of separating and removing PM from the exhaust gas. That is to say, regeneration of a filter 17 is not carried out as long as its filter chamber 10 is connected to form part of a flow passage of the exhaust gas through the exhaust duct 1. It is after the filter chamber 10 has been disconnected from the exhaust gas flow passage that the filter chamber 10 is heated to a temperature for complete combustion of PM which has deposited on its filter 17. Therefore, the respective filter chambers 10 of the filter unit 2 are thermally insulated from each other.

By adoption of the arrangements as described above, it becomes possible to separate and remove toxic particulate matter (PM) which occurs in Diesel engine emissions, while converting NOx into a harmless form. Diesel engine exhaust gas in the exhaust duct 1 flows from the inflow passage 1a toward the outflow passage 1b, but a heater 18 of a filter chamber 10 is not turned on when the filter chamber 10 is connected to the inflow passage 1a for removal of PM from the influent exhaust gas. Accordingly, while PM in the exhaust gas is removed and trapped on a filter 17 within a filter chamber 10, there is no possibility of oxidization of reductants like carbon monoxide and hydrocarbons which are contained in the exhaust gas. That is to say, after separation of PM, the exhaust gas flowing out of each filter chamber 10 contains NOx along with non-oxidized reductant gas components.

In this manner, while PM is trapped in one of the filter chambers 10 by its filtering function, heaters 18 in other filter chambers 10 are turned on one after another to heat the respective filter chambers up to a temperature at which trapped PM is burned off and removed by complete combustion for regeneration of the filters 17. While PM is filtered out in one of the four filter chambers 10, there is no need for concurrently burning off PM in all of the remaining three filter chambers 10. That is to say, it is possible to turn on and off the heaters 18 in relation with intermittent 90 degrees revolutions of the rotary shutter 20, turning off a heater 18 of a filter chamber 10 which will come to a PM filtering position next time, cooling off that filter chamber 10 before starting a PM filtering operation. On-off of the respective heaters 17 is controlled by a control circuit 23. In this regard, arrangements may be made to revolve the rotary shutter 20 intermittently at predetermined time intervals, or upon detection of a pressure loss in a filter chamber 10 in a PM filtering phase, revolving the rotary shutter 20 when pressure in a filter chamber 10 exceeds a predetermined value.

After removal of PM, the exhaust gas which contains NOx along with reductant gas components is admitted into a reaction chamber 30 of the nitrogen oxide treatment section 3. In the reaction chamber 30, the exhaust gas is brought into contact with a nitrogen oxide reduction catalyst 31. As a consequence, NOx are occluded in the nitrogen oxide reduction catalyst 31 along with reductants such as carbon monoxide and hydrocarbons, and converted to harmless N₂ gas by reducing reactions in the presence of the reductants just mentioned. Thus, after removal of PM components and following detoxification of NOx components, cleaned exhaust gas is allowed to flow into the outflow passage 1b of the exhaust duct 1 to prevent or suppress environmental pollutions which would otherwise be caused by Diesel engine emissions.

In this instance, in inducing reducing reactions between NOx and reductants such as carbon monoxide and hydrocarbons which are occluded in the nitrogen oxide reduction catalyst 31, the reductive reactions in the reaction chamber 30 can be accelerated by activating the nitrogen oxide reduction catalyst 31. For instance, an iridium type catalyst can be activated to a maximum degree in a temperature range between 240°C and 300°C. Accordingly, the control circuit 23 at the control of the heaters 18 may be arranged not only to turn on those heaters 18 in filter chambers 10 which are not in a PM stripping phase while turning off a heater 18 in a filter chamber which is in a PM filtering phase, but to turn on a filter 18 in a filter chamber 10 in a PM filtering phase to heat the exhaust gas up to such a temperature as will contribute to activation of the nitrogen oxide reduction catalyst 31 upon introduction into the reaction chamber 31.

### DESCRIPTION OF REFERENCE NUMERALS

| | |
|---|---|
| 1: Exhaust duct | 1a: Inflow passage |
| 1b: Outflow passage | 2: Filter unit |
| 3: Nitrogen oxide treatment section | 10: Filter chamber |
| 11: Tubular outer casing | 12: Tubular inner casing |
| 16: Outlet opening | 17: Filter |
| 18: Heater | 20: Rotary shutter |
| 21: Communication passage | 30: Reaction chamber |
| 31: Nitrogen oxide reduction catalyst | |

## Claims

1. An apparatus for treating Diesel engine exhaust gas, into which Diesel engine exhaust gas is introduced to get rid of particulate matter and to reduce nitrogen oxides in said exhaust gas to harmless nitrogen gas,
**characterized in that** said apparatus comprises:
a filter unit located in an upstream side of a Diesel engine exhaust gas duct and composed of a plural number of filter chambers each encasing a permeable filter member capable of trapping particulate matter in said exhaust gas while permitting passage therethrough of reductant gas components in said exhaust gas, and a nitrogen oxide treatment section located in a downstream side of said Diesel engine exhaust gas duct and encasing a nitrogen oxide reduction catalyst to induce reducing reactions between nitrogen oxides and said reductant gas components in said exhaust gas;
said filter chambers of said filter unit being thermally insulated from each other and each provided with a heater to burn off trapped particulate matter; and
a control means for the control of exhaust gas feed to the respective filter chambers of said filter unit, said control means being adapted to feed exhaust gas successively to said filter chambers, making an exhaust gas feed to one filter chamber in one time period while suspending an exhaust gas feed to other filter chambers during that time period.

2. An apparatus for treating Diesel engine exhaust gas as set forth in claim 1, wherein each one of said filter chambers of said filter unit is packed with a permeable filter of ceramic fiber capable of filtering out particulate matter in said exhaust gas while permitting passage of reductant gas components including at least carbon monoxide and hydrocarbons.

3. An apparatus for treating Diesel engine exhaust gas as set forth in claim 2, wherein said filter is packed between tubular inner and outer casings, of which said inner casing having an inlet opening at one end of a closed porous tube, said heater being located within said inner casing and extended forward toward said inlet opening from a closed bottom end, and said outer casing being formed of a heat insulating material.

4. An apparatus for treating Diesel engine exhaust gas as set forth in claim 1, wherein said filter unit further comprises a shutter for covering and uncovering inlet openings of the respective filter chambers under control of said control means, in such a way as to uncover an inlet opening of one of said filter chambers to let said exhaust gas in, and turning on a heater in other filter chamber to burn off trapped particulate matter on said filter while said inlet opening is closed by said shutter.

5. An apparatus for treating Diesel engine exhaust gas as set forth in claim 4, wherein said control means is adapted to turn on a heater of a filter chamber in a phase of trapping particulate material, and to heat said exhaust gas up to a temperature range suitable for activation of said nitrogen oxide reduction catalyst in said nitrogen oxide treatment section.

6. An apparatus for treating Diesel engine exhaust gas as set forth in claim 1, wherein said filter chambers of said filter unit are arranged in a circular formation and said shutter is in the form of a rotary shutter adapted to uncover an inlet opening of one of said filter chambers selectively in one time period and provided with a communication passage for introduction of said exhaust gas through the uncovered inlet opening.

7. An apparatus for treating Diesel engine exhaust gas as set forth in claim 1, wherein said nitrogen oxide reduction catalyst is constituted by an occlusion material of a honeycomb structure.

8. An apparatus for treating Diesel engine exhaust gas as set forth in claim 7, wherein said occlusion material employs iridium or rhodium as a nitrogen oxide reduction catalyst on a porous carrier of silica.
